# EUROPÄISCHE PATENTSCHRIFT

(11) **EP 3 966 877 B1**
(45) Veröffentlichungstag und Bekanntmachung des Hinweises auf die Patenterteilung: **05.08.2026**
(21) Anmeldenummer: 20725141.4
(22) Anmeldetag: 07.05.2020
(51) Int. Cl.: H01M 50/24

(54) **BATTERIEGEHÄUSE UND BATTERIE MIT EINEM SOLCHEN**
BATTERY HOUSING AND BATTERY WITHIN
BOÎTIER DE BATTERIE ET LADITE BATTERIE

(30) Priorität: 10.05.2019 DE 102019112219
(43) Veröffentlichungstag der Anmeldung: 16.03.2022
(73) Patentinhaber: Clarios Germany GmbH & Co. KG, 30419 Hannover (DE)
(72) Erfinder: KOOP, Michael, 33729 Bielefeld (DE)
(74) Vertreter: Meissner Bolte Partnerschaft mbB
(86) Internationale Anmeldenummer: PCT/EP2020/062642
(87) Internationale Veröffentlichungsnummer: WO 2020/229276

(56) Entgegenhaltungen:
- EP-A1- 3 264 492
- EP-A1- 3 419 103
- EP-B1- 1 898 479
- DE-A1- 102017 211 372
- DE-B4- 102005 005 530
- US-A1- 2012 103 714
- US-A1- 2013 257 103
- US-A1- 2017 200 926

## Beschreibung

Die vorliegende Erfindung betrifft ein Batteriegehäuse für eine Fahrzeug-Batterie, insbesondere für eine Lastkraftwagen (LKW)-Batterie und eine Batterie für ein Fahrzeug, insbesondere für einen LKW, mit einem solchen.

Die Druckschrift DE 10 2017 211 372 A1 betrifft eine Batterie, insbesondere Fahrzeugbatterie, mit einem Batteriegehäuse zur Aufnahme zumindest eines Batteriemoduls, welches ein Gehäuseunterteil aufweist, dem ein Deckelelement zugeordnet ist. Das Gehäuseunterteil weist eine Wandstruktur und eine Bodenstruktur auf, wobei zumindest die Wandstruktur durch Sandwichplatten gebildet ist, welche jeweils wenigstens eine Innenlage sowie eine äußere und eine innere Decklage aufweisen. Die Sandwichplatten sind rechtwinklig aneinandergesetzt und in ihren Kontaktbereichen mittels aufgesetzter L-Profile untereinander dicht verbunden.

Die Druckschrift EP 3 264 492 A1 betrifft ein Batteriemodul sowie ein Verfahren zum Herstellen eines solchen Batteriemoduls.

Ähnliche Batteriemodule sind auch aus der Druckschrift US 2012/0103714 A1 und der Druckschrift US 2017/200926 A1 bekannt.

Herkömmlicherweise werden bei LKW-Batterien eine Vielzahl von elektrochemische Zellen bildende Zellstapel mittels eines Klebstoffs an eine untere Wand (Bodenelement) des Batteriegehäuses geklebt. Dazu wird üblicherweise die gesamte Fläche der unteren Wand mit dem Klebstoff bedeckt und die Zellstapel daraufgesetzt, um den Vibrationswiderstand der LKW-Batterie im Betrieb zu verbessern. Allerdings tritt bei derartigen, herkömmlichen LKW-Batterien das Problem auf, dass aufgrund der im Betrieb (während der Fahrt des LKWs) auftretenden Kräfte und Vibrationen der Klebstoff zwar gut an den Zellstapeln haftet, sich aber von der unteren Wand löst, was dazu führt, dass die Zellstapel und Zellverbinder beschädigt werden können und schlechte Ergebnisse bei Batterie-Vibrationswiderstandstests erzielt werden.

Daher liegt der vorliegenden Anmeldung die Aufgabe zugrunde, ein verbessertes Batteriegehäuse für Fahrzeugbatterien bereitzustellen, welches die Nachteile des Standes der Technik nicht aufweist und welches schnell, einfach und kostengünstig zu fertigen ist, und welches die Vibrationsbeständigkeit der Batterie im Einsatz bzw. im Betrieb verbessert.

Die der Erfindung zugrundeliegende Aufgabe wird durch die Gegenstände der unabhängigen Patentansprüche 1 und 13 gelöst. Vorteilhafte Weiterbildungen sind in den abhängigen Ansprüchen angegeben.

Demnach wird ein Batteriegehäuse für eine Fahrzeug-Batterie, insbesondere für eine Lastkraftwagen (LKW)-Batterie, angegeben, welche Folgendes aufweist: ein Gehäuseunterteil, zum Aufnehmen einer Vielzahl elektrochemischer Zellen, wobei das Gehäuseunterteil einen Innenraum einschließt, und einen Gehäusedeckel, der mit dem Gehäuseunterteil derart verbindbar oder verbunden ist, dass der Innenraum von einer äußeren Umgebung abgedichtet und verschlossen ist. Das Gehäuseunterteil weist dabei ein Bodenelement auf, wobei auf mindestens einem Bereich des Bodenelements eine Vielzahl von Vorsprüngen in einem Muster angeordnet ist.

Die Vorteile der Erfindung liegen auf der Hand. Das Anordnen von einer Vielzahl von Vorsprüngen in mindestens einem Bereich des Bodenelements in einem Muster sorgt dafür, dass die Rauigkeit des Bodenelements auf makroskopischer Ebene vergrößert wird. Eine Erhöhung der Rauigkeit des Bodenelements führt dazu, dass die Oberfläche des Bodenelements vergrößert wird. Eine derartige Oberflächenvergrößerung wirkt sich im weiteren Verlauf und insbesondere dann, wenn das Batteriegehäuse in einer LKW-Batterie zum Einsatz kommt, positiv auf die Vibrationsbeständigkeit der LKW-Batterie aus, da durch Vorsehen bzw. Anordnen der Vielzahl von Vorsprüngen in einem Muster die Haftung zwischen einem Klebstoff, welcher die Vielzahl von elektrochemischen Zellen mit dem Gehäuseunterteil und insbesondere mit dem Bodenelement des Gehäuseunterteiles verbindet, verbessert werden kann. Somit kann vorteilhafterweise ein Ablösen des Klebstoffes von dem Bodenelement verhindert werden, was die Lebensdauer und Sicherheit der Batterie verbessern kann.

Da die Vielzahl an Vorsprüngen einfach mittels eines Spritzgießverfahrens beim Herstellen des Batteriegehäuses geformt werden können, können somit Produktionskosten und -zeiten vorteilhafterweise gesenkt werden. Auch können konventionelle bereits gefertigte Batteriegehäuse nachträglich mit einer Vielzahl von Vorsprüngen in mindestens einem Bereich nachgerüstet werden mittels eines einfach und kostengünstig durchzuführenden Heißpräge- bzw. Heißstempelverfahrens.

Gemäß einem weiteren Aspekt kann die Vielzahl von Vorsprüngen die Oberfläche des mindestens einen Bereichs des Bodenelements um mindestens 20%, bevorzugt um mindestens 25%, besonders bevorzugt um mindestens 30%, vergrößern, und zwar im Vergleich mit der Oberfläche des mindestens einen Bereichs des Bodenelements ohne Vorsprünge (d.h., der zumindest im Wesentlichen ebenen Oberfläche des mindestens einen Bereichs des Bodenelements).

Somit kann die Klebefläche im Vergleich mit einem konventionellen Batteriegehäuse um mindestens 20% vergrößert werden, was die Vibrationsbeständigkeit sowie die Haftungsfähigkeit des erfindungsgemäßen Batteriegehäuses verbessert, und zwar ohne einen größeren Bauraum und/oder teureren Klebstoff zu benötigen.

Gemäß einem weiteren Aspekt kann sich die Vielzahl von Vorsprüngen zumindest im Wesentlichen senkrecht von dem Bodenelement in Richtung des Innenraumes erstrecken. Somit kann eine Vergrößerung der Oberfläche des Bodenelements erreicht werden.

Gemäß einem weiteren Aspekt kann die Vielzahl von Vorsprüngen in einem Streifenmuster angeordnet sein. Dabei kann sich zumindest ein Teil der Streifen entlang der Längsrichtung des Batteriegehäuses erstrecken und/oder zumindest ein Teil der Streifen entlang einer Breitenrichtung des Batteriegehäuses und/oder diagonal zu der Längsrichtung und/oder Breitenrichtung des Batteriegehäuses erstrecken. Dies entspricht einfachen und damit, vorteilhafterweise, kostengünstigen und nicht aufwendig zu fertigenden Mustern.

Gemäß einem weiteren Aspekt kann das Muster zumindest im Wesentlichen einem waffelähnlichen Muster entsprechen. Dabei schließen die Vorsprünge zumindest im Wesentlichen rautenförmige Ausnehmungen ein, in welche Klebstoff einfließen kann. Somit kann vorteilhafterweise auch ein formschlussähnlicher Effekt erzielt werden, was die Vibrationsbeständigkeit des Batteriegehäuses und somit der Batterie, wenn das Batteriegehäuse eingesetzt ist, verbessert.

Gemäß einem weiteren Aspekt kann das Gehäuseunterteil eine Vielzahl, insbesondere vier, von Seitenwänden aufweisen, welche den Innenraum begrenzen und welche mit dem Bodenelement verbunden sind, und sich von dem Bodenelement zumindest im Wesentlichen senkrecht erstrecken, was vorteilhafterweise die Oberfläche des Bodenelements in Richtung Innenraum vergrößert.

Gemäß einem weiteren Aspekt kann das Gehäuseunterteil ferner eine Vielzahl von Trennwänden aufweisen, welche den Innenraum in eine Vielzahl an Zellkammern aufteilt. Dabei ist jeweils eine Zellkammer dazu ausgebildet, eine zugehörige elektrochemische Zelle aufzunehmen.

Gemäß einem weiteren Aspekt kann der mindestens eine Bereich von den Seitenwänden und/oder den Trennwänden beabstandet angeordnet sein, so dass zwischen der Vielzahl von Vorsprüngen und den Seitenwänden, respektive den Trennwänden, ein Spalt angeordnet ist. Insbesondere kann der Spalt umlaufend um die Vielzahl von Vorsprüngen ausgebildet sein. Dadurch kann vorteilhafterweise verhindert werden, dass Kräfte und/oder Vibrationen, die auf das Bodenelement wirken, an die Seitenwände übertragen werden, was zu Rissbildungen führen kann.

Gemäß einem weiteren Aspekt kann der mindestens eine Bereich der gesamten Fläche des Bodenelements in Richtung des Innenraumes entsprechen, oder kann einer Fläche des Bodenelements in einer Zellkammer entsprechen, was vorteilhafterweise mit einer verbesserten Oberflächenvergrößerung respektive einer erhöhten Rauigkeit des Bodenelements einhergeht. Dadurch kann die Haftwirkung des Klebstoffs an dem Bodenelement kostengünstig verbessert werden.

Gemäß einem weiteren Aspekt kann ein Querschnitt der Vielzahl von Vorsprüngen zumindest im Wesentlichen dreiecksförmig, halbkreisförmig, rechteckförmig oder in Form eines Sägezahnprofiles ausgebildet sein.

Gemäß einem weiteren Aspekt kann die Oberfläche der Vielzahl von Vorsprüngen (beispielsweise auf mikroskopischer Ebene) aufgeraut sein, was vorteilhafterweise zu einer weiteren Oberflächenvergrößerung führen kann.

Die der Erfindung zugrundeliegende Aufgabe wird ferner durch eine Batterie für ein Fahrzeug, insbesondere eine Batterie für einen LKW, gemäß dem Gegenstand des Anspruches 16, gelöst, wobei die Batterie Folgendes aufweist: ein Batteriegehäuse, wie es obenstehend beschrieben ist, und eine Vielzahl von elektrochemischen Zellen, wobei die Vielzahl von elektrochemischen Zellen in dem Innenraum des Gehäuseunterteiles angeordnet sind und über einen Klebstoff, welcher auf dem Bodenelement des Gehäuseunterteiles angeordnet ist, mit dem Bodenelement stoffschlüssig verbunden sind. Mittels einer solchen Anordnung kann vorteilhafterweise eine Batterie respektive eine LKW-Batterie bereitgestellt werden, welche vorteilhafterweise Vibrationsbeständig ausgebildet ist. Insbesondere kann aufgrund der Vielzahl von Vorsprüngen die Haftwirkung des Klebstoffs an dem Bodenelement des Gehäuseunterteils verbessert werden.

Gemäß einem weiteren Aspekt kann der Klebstoff ein Heißklebstoff oder ein Epoxidharzklebstoff sein.

Gemäß einem weiteren Aspekt kann die Vielzahl von Vorsprüngen die Oberfläche des mindestens einen Bereichs des Bodenelements um mindestens 20%, bevorzugt um mindestens 25%, besonders bevorzugt um mindestens 30%, vergrößern, derart, dass sich die Klebefläche um mindestens 20%, bevorzugt um mindestens 25%, besonders bevorzugt um mindestens 30%, vergrößert. Dadurch kann vorteilhafterweise eine Ablösung des Klebstoffs respektive der Klebeschicht von dem Bodenelement verhindert werden.

Die Erfindung wird nachstehend, auch hinsichtlich weiterer Merkmale und Vorteile, anhand der Beschreibung von Ausführungsformen unter Bezugnahme auf die beiliegenden Zeichnungen näher erläutert.

Diese zeigen in:
- FIG. 1: eine schematische Darstellung einer Batterie;
- FIGS. 2 bis 8: schematische Darstellungen einer Draufsicht auf ein Gehäuseunterteil der Batterie; und
- FIGS. 9a bis 11: schematische Darstellungen eines Querschnittes durch eine Zellkammer in dem Batteriegehäuse.

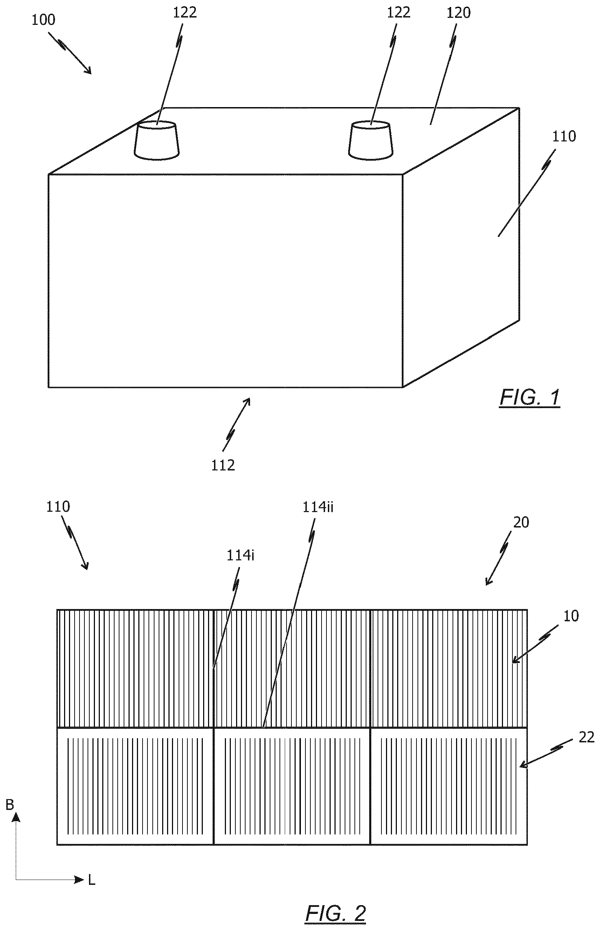

Nachfolgend werden Aspekte des erfindungsgemäßen Batteriegehäuses und der erfindungsgemäßen Batterie unter Bezugnahme auf die Darstellungen in den FIGS. 1 bis 11 genauer beschrieben. Gleiche oder gleichwirkende Elemente und Funktionen sind mit denselben oder ähnlichen Bezugszeichen versehen.

In jeder der Zeichnungen müssen die Abmessungsverhältnisse bei den FIGS. und/oder die Anzahl an dargestellten Elementen nicht notwendigerweise mit den tatsächlichen Abmessungsverhältnissen bzw. der tatsächlichen Anzahl der dargestellten Elemente übereinstimmen. Auch die Abmessungsverhältnisse zwischen den FIGS. müssen nicht notwendigerweise übereinstimmen.

Im Folgenden wird die Batterie und das Batteriegehäuse derart beschrieben, dass relative Begriffe auf den Einbau-Zustand der Batterie bezogen sind. So bedeutet beispielsweise "in einem oberen Bereich" in einem im eingebauten Zustand gesehenen oberen Bereich, "in einem seitlichen Bereich" in einem im eingebauten Zustand und in Fahrtrichtung gesehenen Bereich, der sich in einem vorderen, hinteren, linken oder rechten Bereich befindet, und "in einem unteren Bereich" in einem im eingebauten Zustand gesehenen unteren Bereich.

Batterien, welche mit einem Batteriegehäuse gemäß der vorliegenden Erfindung ausgestattet sind, werden insbesondere in Fahrzeugen als Starterbatterien verwendet. Dabei kann die Batterie in einem in Fahrtrichtung gesehenen vorderen Bereich des Fahrzeuges, in einem hinteren Bereich des Fahrzeuges und/oder in einem Bereich unterhalb der Sitze, insbesondere unterhalb des Fahrersitzes angeordnet sein.

Das Fahrzeug kann dabei ein Luft- oder Wasserfahrzeug, ein spurgeführtes Fahrzeug, ein Geländewagen oder bevorzugt ein Straßenfahrzeug sein, wobei unter Straßenfahrzeug ein Personenkraftwagen (PKW), insbesondere ein Lastkraftwagen (LKW), ein Bus oder ein Wohnmobil verstanden werden kann.

Wenn die Batterie in einem LKW verwendet wird, ist es auch denkbar, dass sie an einer Stelle außerhalb der Führerkabine angeordnet ist, und insbesondere an einer Sattelplatte des LKWs angebracht sein kann.

Die im Folgenden beschriebene Batterie basiert auf der Bleisäure-Technologie. Es ist allerdings auch denkbar, dass die Batterie auf anderen Technologien, wie beispielsweise NiMH-, Lithium-Ionen- oder Nickel-Cadmium-Technologie basiert.

Batterien, welche auf der Bleisäure-Technologie basieren, eignen sich insbesondere zum Einsatz als Starterbatterien in Fahrzeugen. Des Weiteren können solche Batterien ebenfalls überall dort eingesetzt werden, wo in einem kurzen Zeitraum relativ hohe Ströme benötigt werden.

Die Batterie für ein Fahrzeug bzw. die Batterie für einen LKW gemäß der vorliegenden Erfindung weist ein Batteriegehäuse 100 und eine Vielzahl von elektrochemischen Zellen auf, welche in dem Batteriegehäuse 100 angeordnet und aufgenommen sind.

Das Batteriegehäuse 100 kann dabei in ein Gehäuseunterteil 110 und einen Gehäusedeckel 120 unterteilt sein, welche derart miteinander verbindbar sind, dass ein von dem Batteriegehäuse 100 definierter und eingeschlossener Innenraum gegenüber einer äußeren Umgebung abgeschlossen und abgedichtet ist. Insbesondere kann der Gehäusedeckel 120 mit dem Gehäuseunterteil 110 verschweißt werden. Alternativ ist es auch denkbar, den Gehäusedeckel 120 mit dem Gehäuseunterteil 110 mittels einer oder mehrerer Schraubverbindung und/oder Klemmelemente dicht miteinander zu verbinden und zu verschließen.

In dem Gehäusedeckel 120 können zumindest ein positives und ein negatives Batterieterminal 122 angeordnet bzw. eingesetzt sein, welche elektrisch mit der Vielzahl elektrochemischer Zellen verbunden sind. Ferner kann in dem Gehäusedeckel 120 eine Entgasungsöffnung, welche mit einem Entgasungsstopfen verschließbar bzw. verschlossen ist, und/oder einer Einfüllöffnung, welche mit einem Verschlussstopfen verschließbar bzw. verschlossen ist, angeordnet sein.

Das Gehäuseunterteil 110 ist derart ausgebildet, dass es eine Vielzahl elektrochemischer Zellen aufnimmt und zumindest im Wesentlichen den Innenraum des Batteriegehäuses 100 definiert bzw. einschließt. Dazu weist das Gehäuseunterteil eine Vielzahl, insbesondere vier Seitenwände auf, welche den Innenraum begrenzen (insbesondere umschließen) und welche mit einem Bodenelement 112 verbunden sind. Insbesondere erstreckt sich die Vielzahl von Seitenwänden im Wesentlichen senkrecht von dem Bodenelement 112, so dass der Innenraum zumindest im Wesentlichen von der Vielzahl von Seitenwänden sowie dem Bodenelement 112 definiert wird.

Dabei kann das Bodenelement 112 und die Seitenwände integral ausgebildet sein, was vorteilhafterweise einfach und kostengünstig zu fertigen ist (beispielsweise mit einem Spritzgussverfahren). Genauso gut ist es allerdings auch denkbar, das Bodenelement 112 als Insert auszubilden, welches in die Seitenwände eingegossen werden kann, wodurch vorteilhafterweise das Material des Bodenelements 112 unabhängig von dem Material der Seitenwände gewählt werden kann.

Vorteilhafterweise kann beispielsweise in Abhängigkeit von der Art des Klebstoffs, der verwendet werden soll, das Material des Inserts derart gewählt werden, dass eine möglichst optimale Haftwirkung des Klebstoffs auf dem Insert bzw. dem Bodenelement erzielt werden kann.

Ferner können in dem Gehäuseunterteil 110 eine Vielzahl von Trennwänden 114i, 114ii angeordnet sein, welche den Innenraum in eine Vielzahl von Zellkammern 20 unterteilen.

Dabei kann insbesondere eine entlang einer Längsrichtung L der Batterie bzw. des Batteriegehäuses 100 angeordnete longitudinale Trennwand 114ii und/oder eine oder mehrere in Breitenrichtung B der Batterie bzw. des Batteriegehäuses 100 und parallel zueinander ausgerichtet angeordnete transversale Trennwand 114i bzw. Trennwände 114i angeordnet sein.

Beispielsweise wie es in den schematischen Darstellungen in FIGS. 2 bis 8 angedeutet ist, kann der Innenraum des Gehäuseunterteiles 110 mittels einer longitudinalen Trennwand 114ii und zwei voneinander in einem gleichmäßigen Abstand beabstandeten transversalen Trennwänden 114i in sechs zumindest im Wesentlichen gleich große Zellkammern 20 unterteilt sein.

Auch wenn dies in den FIGS. nicht explizit dargestellt ist, ist es natürlich auch denkbar, dass je nach Anforderung und benötigter Anzahl an elektrochemischen Zellen das Batteriegehäuse 100 bzw. das Gehäuseunterteil 110 mehr oder weniger als sechs Zellkammern 20 aufweist.

Auch ist es denkbar, dass die Trennwände 114i, 114ii eine Länge aufweisen, welche zumindest im Wesentlichen der Breite des Batteriegehäuses 100 bzw. der Länge des Batteriegehäuses entspricht. Genauso gut ist es allerdings auch denkbar, dass die Länge der Trennwände 114i, 114ii derart ausgebildet ist, dass sie der Breite bzw. Länge einer Zellkammer entspricht. Mit anderen Worten, das in FIG. 2 angedeutete Gehäuseunterteil 110 kann entweder mittels einer (großen) longitudinalen Trennwand 114ii und zwei voneinander in Längsrichtung L beabstandeten transversalen Trennwänden 114i unterteilt sein. Genauso gut könnten aber drei longitudinale Trennwände 114ii, sowie vier voneinander beabstandete transversale Trennwände 114i angeordnet sein. In beiden Fällen können beispielsweise sechs zumindest im Wesentlichen gleich große Zellkammern 20 definiert werden.

Das Gehäuseunterteil 110 ist ferner dazu ausgelegt, eine Vielzahl von elektrochemischen Zellen aufzunehmen und darin anzuordnen. Insbesondere kann jeweils eine elektrochemische Zelle in eine zugehörige Zellkammer 20 aufgenommen werden und darin angeordnet werden.

Jede der elektrochemischen Zellen weist dabei einen Zellstapel auf, welcher aus einer Vielzahl von positiven Elektrodenplatten und negativen Elektrodenplatten, sowie einer Vielzahl von Separatoren, welche die positiven Elektrodenplatten von den negativen Elektrodenplatten elektrisch isolieren, gebildet ist. In diesem Zusammenhang kann beispielsweise jeder Separator als Separator-Tasche ausgebildet sein, in welche jeweils eine positive Elektrodenplatte aufgenommen ist.

Ferner können, wenn die Batterie als AGM-Batterie (Absorbent Glass Mat-Batterie) ausgebildet ist, eine Vielzahl von Glasfaser- oder Vliesmatten, in welche die Batteriesäure komplett aufgenommen ist, angeordnet sein. Dadurch kann die Batterie trocken und lageunabhängig betrieben werden. Genauso gut ist es allerdings auch denkbar, eine Nassbatterie mit einem flüssigen Elektrolyten vorzusehen bzw. auszubilden.

Optional können die Zellstapel auch in einem zusätzlichen Zellgehäuse angeordnet werden.

Um die Vibrationsbeständigkeit der Batterie zu erhöhen, werden die Zellstapel bzw. das Zellgehäuse stoffschlüssig mit dem Bodenelement 112 verbunden. Insbesondere werden die Zellstapel auf das Bodenelement 112 geklebt.

Als Klebstoff eignet sich beispielsweise ein Schmelzkleber, ein Zwei-Komponentenkleber oder ein Kleber auf Epoxidharzbasis.

Das Batteriegehäuse 100 (d.h. Gehäuseunterteil 110 und/oder Gehäusedeckel 120) kann insbesondere aus einem Polyolefin oder einem Copolymer, welches ein Polyolefin aufweist, gefertigt sein. Insbesondere kann das Batteriegehäuse 100 aus Polypropylen, Polyethylen, Polypropylen-Polyethylen-Copolymer und dergleichen gefertigt sein.

Um zu verhindern, dass sich die stoffschlüssige Verbindung zwischen dem Zellstapel bzw. dem Zellgehäuse und dem Bodenelement 112 aufgrund von Vibrationen und Krafteinwirkungen im Betrieb löst, sind auf der dem Innenraum des Batteriegehäuses 100 zugewandten Fläche des Bodenelements 112 eine Vielzahl von Vorsprüngen 10 angeordnet, welche die Vibrationsbeständigkeit der Batterie verbessern können.

Die Vielzahl von Vorsprüngen 10 ist zumindest auf einem Bereich des Bodenelements 112 in einem Muster angeordnet. Mit anderen Worten, die Vielzahl an Vorsprüngen 10 bildet zumindest in einer Draufsicht (d.h., einer Ebene, welche von der Längsrichtung L und Breitenrichtung B des Batteriegehäuses 100 aufgespannt wird) auf das Bodenelement 112 in mindestens einem Bereich ein Muster aus.

In FIGS. 2 bis 8 ist jeweils ein exemplarisches Gehäuseunterteil 110 dargestellt, welches Trennwände 114i, 114ii aufweist, welche den Innenraum des Batteriegehäuses 100 in sechs zumindest im Wesentlichen gleich große Zellkammern 20 unterteilt.

Auch wenn dies nicht in den FIGS. explizit dargestellt ist, ist es alternativ natürlich auch denkbar, dass keine Trennwände 114i, 114ii oder eine andere Anzahl an Trennwänden 114i, 114ii vorgesehen sind, welche den Innenraum des Batteriegehäuses 100 in eine andere Anzahl an Zellkammern 20 unterteilt. So kann beispielsweise ein Bereich, in welchem die Vielzahl von Vorsprüngen 10 angeordnet ist, derart ausgebildet sein, dass er sich zumindest im Wesentlichen über die gesamte Fläche des Bodenelements 112 erstreckt.

Auch sind in FIGS. 2 bis 8 die drei in Breitenrichtung B gesehenen oberen Zellkammern 20 ohne Spalt 22 und die drei in Breitenrichtung B gesehenen unteren Zellkammern 20 mit einem Spalt 22 ausgebildet. Allerdings ist dies nur eine exemplarische Darstellung und kann je nach Anforderung beliebig gewählt werden. Beispielsweise kann keine der Zellkammern 20 einen Spalt 22 aufweisen (d.h., die Vielzahl von Vorsprüngen 10 erstreckt sich in allen Zellkammern 20 bzw. in dem Innenraum bis zu den jeweiligen Seitenwänden bzw. Trennwänden 114i, 114ii) oder alle Zellkammern 20 sind derart ausgebildet, dass zwischen den jeweiligen Zellwänden bzw. Trennwänden 114i, 114ii und der Vielzahl von Vorsprüngen 10 ein Spalt 22 ausgebildet ist (d.h., die Vorsprünge 10 erstrecken sich nicht bis zur Trennwand 114i, 114ii bzw. Seitenwand des Batteriegehäuses 100). Insbesondere kann der Spalt 22 umlaufend um die Vielzahl an Vorsprüngen 10 ausgebildet sein.

Es ist auch denkbar, dass - anders als in den FIGS. 2 bis 8 gezeigt - entweder alle Bereiche mit einem Spalt 22 zu den Seitenwänden bzw. Trennwänden 114i, 114ii angeordnet sind oder sich alle Vorsprünge 10 bis hin zu den Trennwänden 114i, 114ii bzw. Seitenwänden (d.h. ohne Spalt 22) erstrecken.

Wie in FIG. 2 exemplarisch angedeutet ist, kann dabei das Muster in Form eines Streifenmusters ausgebildet sein. Wie in FIG. 2 dargestellt, erstreckt sich die Vielzahl von Vorsprüngen 10 parallel zueinander und in Breitenrichtung B des Batteriegehäuses 100.

Wie in FIG. 2 angedeutet, ist eine Vielzahl von Vorsprüngen in sechs Bereichen, welche zumindest im Wesentlichen der Fläche des Bodenelements 112 in einer entsprechenden Zellkammer 20 entsprechen, angeordnet.

Dabei können sich die Vielzahl von Vorsprüngen von der Trennwand 114ii bis hin zu einer Seitenwand des Gehäuseunterteiles 110 hin erstrecken, wie es beispielsweise in den oberen drei Zellkammern 20 angedeutet ist.

Genauso gut ist es allerdings denkbar, wie es in den unteren drei Zellkammern 20 der FIG. 2 angedeutet ist, dass die Vielzahl von Vorsprüngen 10 um einen Spalt 22 von den Seitenwänden bzw. Trennwänden 114i, 114ii beabstandet ist.

Insbesondere kann ein Spalt 22 zwischen der Vielzahl an Vorsprüngen 10 und den entsprechenden Seitenwänden bzw. Trennwänden 114i, 114ii vorteilhafterweise gewährleisten, dass Kräfte und Vibrationen die auf das Bodenelement 112 wirken nicht so leicht auf die Seitenwände bzw. Trennwände 114i, 114ii übertragen werden, wodurch das Risiko zur Rissbildung in den Seitenwänden bzw. Trennwänden 114i, 114ii und/oder dem Übergangsbereich von dem Bodenelement 112 zu den Seitenwänden bzw. Trennwänden 114i, 114ii reduziert werden kann.

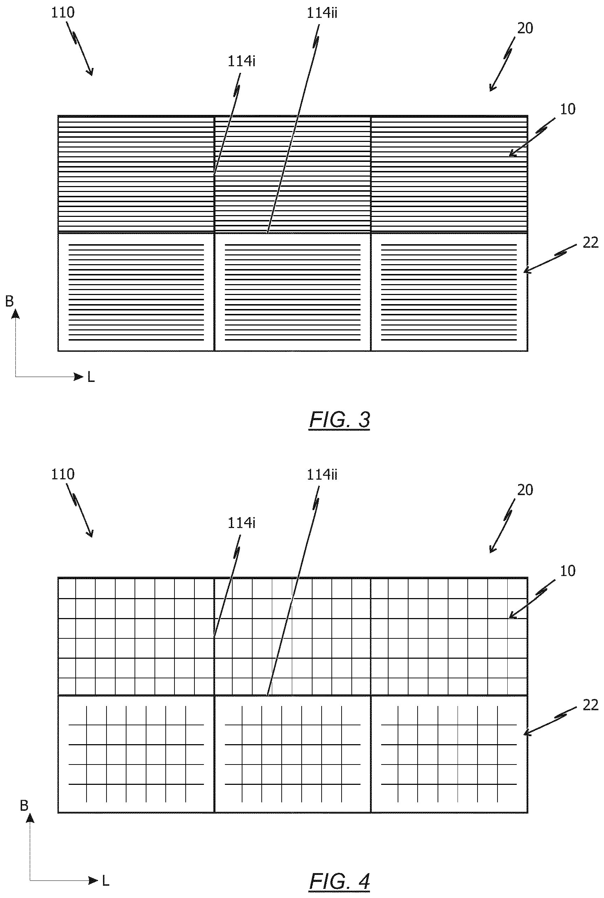

FIG. 3 zeigt eine weitere Ausbildungsform des Musters, in welchem die Vielzahl von Vorsprüngen 10 angeordnet sein kann. Insbesondere können die Vorsprünge 10 in einem longitudinalen Streifenmuster angeordnet sein, so dass sich die Vielzahl an Vorsprüngen 10 im Wesentlichen entlang der Längsrichtung L des Batteriegehäuses 100 und parallel zueinander erstreckt. Wie schon vorstehend beschrieben, können sich die Vielzahl an Vorsprüngen 10 entweder vollständig bis hin zu den Seitenwänden bzw. Trennwänden 114ii erstrecken oder es kann ein Spalt 22 zwischen den Seitenwänden bzw. Trennwänden 114i, 114ii und der Vielzahl an Vorsprüngen 10 ausgebildet sein.

FIG. 4 zeigt ein weiteres Muster, bei dem eine Vielzahl an Vorsprüngen in einem karierten Muster angeordnet sind. Dabei können die Abstände zwischen den Vorsprüngen 10 größer gewählt werden als bei reinen Streifenmuster, um zu gewährleisten, dass der Klebstoff in die von den Vorsprüngen eingeschlossenen Mulden einfließen kann. Genauso wie in Bezug auf FIG. 2 und FIG. 3 beschrieben, kann auch bei dem Muster gemäß FIG. 4 ein Spalt 22 zwischen der Vielzahl an Vorsprüngen 10 und den entsprechenden Trennwänden 114i, 114ii bzw. Seitenwänden vorgesehen bzw. angeordnet sein.

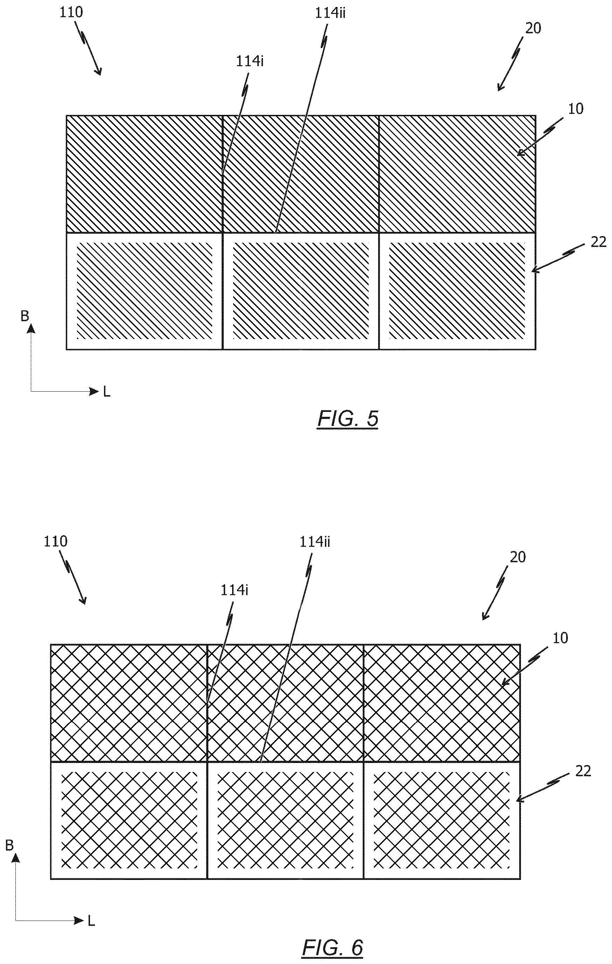

FIG. 5 zeigt eine Ausführungsform, bei der die Vielzahl von Vorsprüngen 10 sich diagonal, d.h. in einem Winkel zu der Längsrichtung L bzw. Breitenrichtung B (, der nicht rechtwinklig ist), erstreckt.

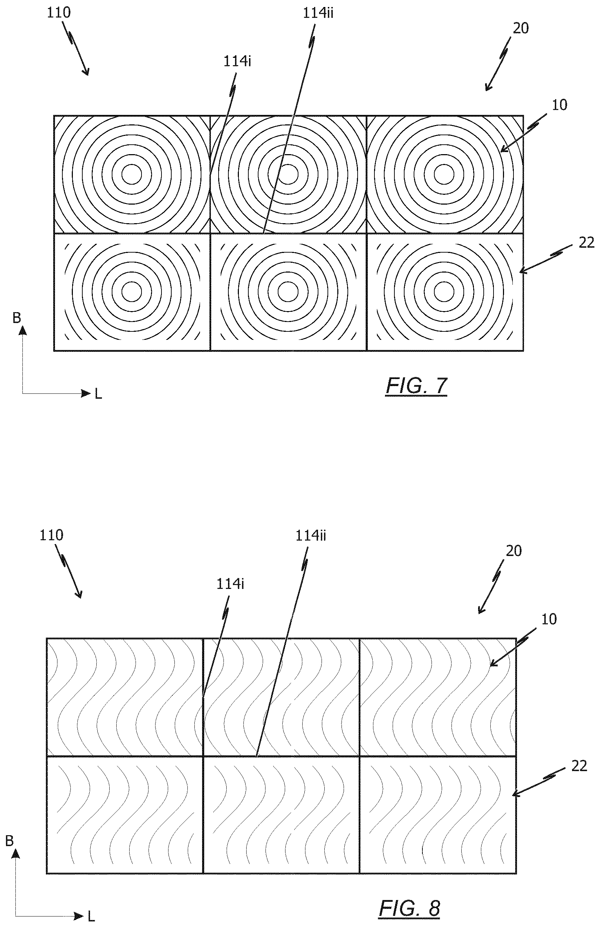

Genauso gut kann das Muster wie in FIG. 6 angedeutet, ein waffelähnliches Muster sein, oder wie in FIG. 7 angedeutet, ein Muster bei dem sich die Vielzahl an Vorsprüngen 10 zumindest im Wesentlichen kreisförmig und/oder teilkreisförmig von einer zentralen Region des mindestens einen Bereichs aus erstrecken, oder das Muster kann im Wesentlichen schlangenlinienförmig ausgebildet sein, wie es in FIG. 8 angedeutet ist.

Es sind allerdings auch andere Muster wie beispielsweise eine regelmäßige oder unregelmäßige Zick-Zack-Form der Vorsprünge 10 denkbar.

Auch wenn dies nicht explizit in den FIGS. dargestellt ist, ist zu beachten, dass die Form des Musters nicht auf die oben beschriebenen Muster beschränkt ist.

Auch wenn dies nicht explizit in den FIGS. gezeigt und dargestellt ist, können unterschiedliche Bereiche andere Muster aufweisen. Auch ist es denkbar, in einem Bereich verschiedene Muster von Vorsprüngen 10 auszubilden.

Insbesondere soll erreicht werden, dass mittels der Vielzahl von Vorsprüngen 10 die Oberfläche des Bodenelements 112 vergrößert wird und damit die Rauigkeit des Bodenelements 112 zunimmt, wodurch eine bessere Klebewirkung erzielt werden kann.

Dadurch kann gewährleistet werden, dass sich auch bei Auftreten von Vibrationen im Betrieb der Batterie der Klebstoff gerade nicht von dem Bodenelement 112 löst, was zu einer Beschädigung der elektrochemischen Zellen und/oder des Batteriegehäuses 100 führen kann.

Es kann daher vorteilhaft sein, wenn in einem entsprechenden Bereich mindestens 5 Vorsprünge 10, insbesondere mindestens 10 Vorsprünge 10, insbesondere mindestens 20 Vorsprünge 10, angeordnet sind. Dabei können verschiedene Bereiche eine unterschiedliche Anzahl an Vorsprüngen 10 aufweisen. Je größer der Bereich (bzw. die Oberfläche des Bereichs) ist, auf welchem die Vielzahl von Vorsprüngen 10 ausgebildet ist, desto mehr Vorsprünge 10 (abhängig von deren Ausrichtung) können tendenziell angeordnet werden.

Das Anordnen von mindestens einem Bereich mit einer in einem Muster angeordneten Vielzahl von Vorsprüngen 10 kann die Oberfläche des entsprechenden Bereichs des Bodenelements 112 um mindestens 25%, insbesondere mindestens 30%, insbesondere mindestens 40%, der Fläche des entsprechenden Bereichs des Bodenelements 112 ohne Vorsprünge 10 vergrößern, wodurch sich gleichermaßen die Klebefläche vergrößert. Dadurch erhöht sich die Klebefestigkeit und somit auch die Beständigkeit gegen Vibrationen der Batterie deutlich.

Auch wenn dies in den FIGS. nicht explizit dargestellt ist, ist es erfindungsgemäß so, dass mindestens ein Vorsprung 10 der Vielzahl von Vorsprüngen 10 entlang der Erstreckungsrichtung des Vorsprungs 10 eine Vielzahl von Einkerbungen aufweist, und zwar derart, dass der Vorsprung 10 zumindest im Wesentlichen ein Berg/Tal-Profil entlang seiner Erstreckungsrichtung aufweist. Dadurch kann die Oberfläche weiter vergrößert werden und gleichzeitig kann ein Formschluss zwischen der Oberfläche des Bodenelements 112 und dem Klebstoff ausgebildet werden.

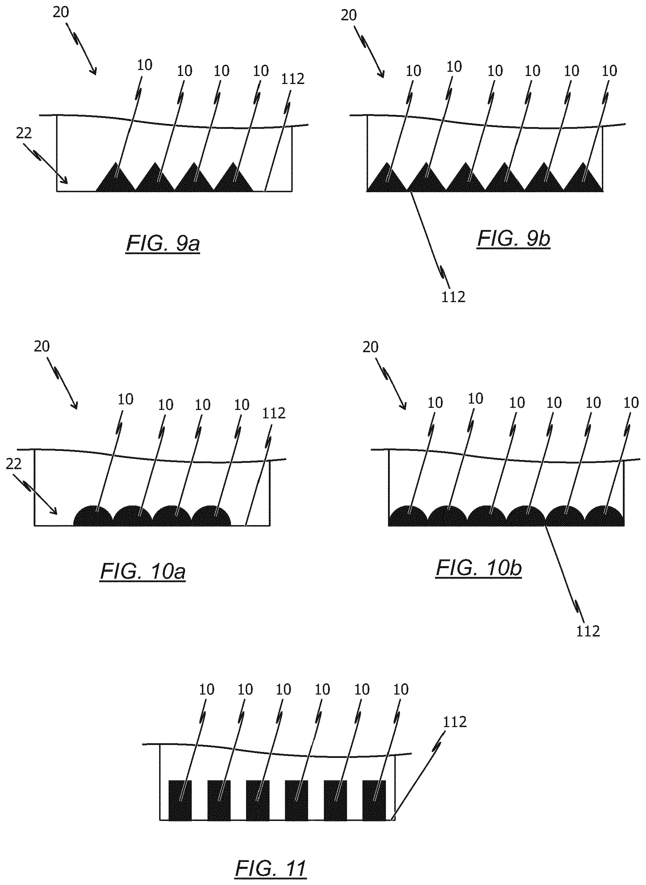

Die Vorsprünge 10 können dabei eine Querschnittsform aufweisen, wie sie beispielsweise in FIGS. 9a, 9b, 10a, 10b und 11 dargestellt bzw. angedeutet ist. Unter Querschnitt wird dabei ein Schnitt durch die Vielzahl von Vorsprüngen 10 senkrecht zu ihrer Erstreckungsrichtung bezeichnet. Beispielsweise in FIG. 3 ein Schnitt parallel zur Breitenrichtung B und gesehen entlang der Längsrichtung L durch die Vielzahl von Vorsprüngen 10.

Unter "Querschnittsform" wird in diesem Zusammenhang der Umriss eines Vorsprungs 10 verstanden, der in Erstreckungsrichtung auf den (senkrechten) Schnitt des Vorsprungs 10 gebildet ist.

Dieser Umriss kann insbesondere dreiecksförmig sein, wobei die einzelnen Vorsprünge direkt aneinandergrenzend angeordnet sein können, wie dies beispielsweise in FIG. 9a und 9b angedeutet ist.

Genauso gut ist es allerdings auch denkbar, die einzelnen Vorsprünge 10 voneinander beabstandet anzuordnen, wodurch das Verteilen des Klebstoffes zwischen den Vorsprüngen 10 vereinfacht werden kann. Auch ist es denkbar, die Vorsprünge 10 in ungleichmäßigen Abständen voneinander beabstandet anzuordnen. Beispielsweise können in Bereichen nahe bei den Trennwänden 114i, 114ii bzw. Seitenwänden kleinere Abstände zwischen den Vorsprüngen 10 ausgebildet sein, um einem Schereffekt in Randbereichen (bzw. stärker belasteten Bereiche) entgegenzuwirken, und in einem zentralen Bereich (bzw. weniger belasteten Bereich) größere Abstände zwischen den Vorsprüngen 10 ausgebildet sein.

Eine weitere nicht in den FIGS. dargestellte mögliche Querschnittsform der Vorsprünge 10 ist beispielsweise auch ein Sägezahnprofil, welches einer Sonderform des Dreiecksprofiles entspricht, bei dem der Querschnitt beispielsweise auf der linken Seite schräg ansteigt und auf der rechten Seite gerade (senkrecht zu dem Bodenelement 112) nach unten verläuft, d.h., ein asymmetrisches Dreieck.

Ferner können die Vorsprünge wie in FIGS. 10a und 10b angedeutet auch eine Halbkreisform aufweisen. Dabei können beispielsweise die Zellstapel einfacher ausgerichtet und angeordnet werden.

Auch die Vorsprünge 10 gemäß FIGS. 10a und 10b können voneinander beabstandet angeordnet sein, auch wenn dies nicht explizit in den FIGS. dargestellt ist.

Alternativ ist es auch denkbar, dass die Vorsprünge 10 einen im Wesentlichen rechteckigen Querschnitt aufweisen können, wie dies in FIG. 11 angedeutet ist.

Zusammengefasst können auf dem Bodenelement 112 verschiedene Bereiche ausgebildet sein, in denen eine Vielzahl von Vorsprüngen 10 in verschiedenen der oben beschriebenen Muster und Querschnittsformen angeordnet sein können. Auch ist es denkbar, in einem Bereich (beispielsweise auf einer Fläche des Bodenelements 112, die einer Zellenkammer 20 zugeordnet ist) verschiedene Muster in verschiedenen Querschnittsformen vorzusehen bzw. anzuordnen.

Die Höhe der Vorsprünge 10 kann dabei maximal 5 mm betragen, insbesondere maximal 3 mm, besonders bevorzugt maximal 2 mm, um den verfügbaren Innenraum nicht unnötig einzuschränken bzw. zu verkleinern.

Somit sind alle oben beschriebenen Muster und Querschnittsformen miteinander frei kombinierbar und nicht auf die in den FIGS. dargestellten Ausführungsformen beschränkt.

Die oben beschriebenen Ausführungsformen wurden derart beschrieben, dass die Vergrößerung der Oberfläche des Bodenelements 112 aufgrund einer Vielzahl von Vorsprüngen 10 erfolgt. Es ist aber auch genauso gut denkbar, anstelle der Vorsprünge 10 eine Vielzahl von Ausnehmungen in einem Muster anzuordnen (d.h., einen komplementär ausgebildeten Fall). Auch eine Kombination von Vorsprüngen und Ausnehmungen ist denkbar.

Die Vielzahl an Vorsprüngen 10 kann einfach und kostengünstig mittels eines Spritzgießprozesses beim Herstellen des Batteriegehäuses 100 bzw. des Gehäuseunterteiles 110 in das Bodenelement 112 eingebracht werden. Es ist allerdings auch denkbar, bereits hergestellte Batteriegehäuse 100 nachzurüsten und diese mittels eines Heißstempelverfahrens oder Heißprägeverfahrens mit einer Vielzahl an Vorsprüngen 10 auszustatten. Somit kann das Anordnen von einer Vielzahl von Vorsprüngen 10 einfach und kostengünstig erfolgen.

Alternativ könnte es auch denkbar sein, die Vorsprünge 10 aus offenporigem Schaum auszubilden, so dass der Klebstoff in die offenen Poren fließen kann. Darüber hinaus könnte mittels einer solchen Ausführungsform eine gewisse Elastizität und Dämpfungsfähigkeit in das Bodenelement 112 eingebracht werden, was dazu führen kann, dass Kräfte und/oder Vibrationen, welche während des Betriebs der Batterie entstehen und auf das Batteriegehäuse 100 wirken, zumindest teilweise aufgenommen und abgedämpft werden können. Dadurch könnte vorteilhafterweise die Sicherheit der Batterie verbessert werden.

Es ist auch denkbar, dass die Oberfläche der Vielzahl an Vorsprüngen 10 zusätzlich (auf mikroskopischer Ebene) weiter aufgeraut wird, wodurch eine weitere Oberflächenvergrößerung erzielt werden kann, was zu einer vergrößerten Klebefläche führt.

Kurz zusammengefasst, sollen also auf dem Bodenelement 112 in mindestens einem Bereich mindestens eine derartige Vielzahl von Vorsprüngen 10 angeordnet sein, so dass eine Vergrößerung der Klebefläche des mindestens einen Bereichs um mindestens 20%, insbesondere mindestens 30%, bevorzugt mindestens 40%, erzielt werden kann.

### Bezugszeichenliste

- 10: Vorsprung/Vorsprünge
- 20: Zellkammer
- 22: Spalt
- 100: Batteriegehäuse
- 110: Gehäuseunterteil
- 112: Bodenelement
- 114i, 114ii: Trennwände
- 120: Gehäusedecke
- 122: Batterieterminal
- B: Breitenrichtung
- L: Längsrichtung

## Patentansprüche

1. Batteriegehäuse (100) für eine Fahrzeug-Batterie, insbesondere für eine Lastkraftwagen-Batterie, wobei das Batteriegehäuse (100) Folgendes aufweist:
- ein Gehäuseunterteil (110) zum Aufnehmen einer Vielzahl elektrochemischer Zellen, wobei das Gehäuseunterteil (110) einen Innenraum einschließt; und
- einen Gehäusedeckel (120), der mit dem Gehäuseunterteil (110) derart verbindbar oder verbunden ist, dass der Innenraum von einer äußeren Umgebung abgedichtet und verschlossen ist,
wobei das Gehäuseunterteil (110) ein Bodenelement (112) aufweist, und wobei auf mindestens einem Bereich des Bodenelementes (112), der dazu ausgebildet ist, einen Klebstoff zum Befestigen der Vielzahl elektrochemischer Zellen aufzunehmen, eine Vielzahl von Vorsprüngen (10) in einem Muster angeordnet ist, wodurch die Rauigkeit des Bodenelements (112) auf makroskopischer Ebene vergrößert wird, um die Haftwirkung des Klebstoffs an dem Bodenelement (112) des Gehäuseunterteils (110) zu verbessern, und
wobei mindestens ein Vorsprung (10) der Vielzahl von Vorsprüngen (10) entlang der Erstreckungsrichtung des Vorsprungs (10) eine Vielzahl von Einkerbungen aufweist, und zwar derart, dass der Vorsprung (10) zumindest im Wesentlichen ein Berg/Tal-Profil entlang seiner Erstreckungsrichtung aufweist.

2. Batteriegehäuse (100) nach Anspruch 1,
wobei die Vielzahl von Vorsprüngen (10) die Oberfläche des mindestens einen Bereichs des Bodenelementes (112) um mindestens 20%, bevorzugt um mindestens 25%, besonders bevorzugt um mindestens 30%, vergrößert, und/oder
wobei sich die Vielzahl von Vorsprüngen (10) zumindest im Wesentlichen senkrecht von dem Bodenelement (112) in Richtung des Innenraumes erstreckt.

3. Batteriegehäuse (100) nach Anspruch 1 oder 2,
wobei die Vielzahl von Vorsprüngen (10) in einem Streifenmuster angeordnet ist.

4. Batteriegehäuse (100) nach Anspruch 3,
wobei sich zumindest ein Teil der Streifen entlang der Längsrichtung (L) des Batteriegehäuses (100) erstreckt, und/oder wobei sich zumindest ein Teil der Streifen entlang einer Breitenrichtung (B) des Batteriegehäuses (100) erstreckt.

5. Batteriegehäuse (100) nach Anspruch 3
wobei sich die Streifen diagonal zu einer Längsrichtung (L) des Batteriegehäuses (100) erstrecken.

6. Batteriegehäuse (100) nach Anspruch 1 oder 2,
wobei das Muster zumindest im Wesentlichen einem waffelähnlichen Muster entspricht.

7. Batteriegehäuse (100) nach Anspruch 1 oder 2,
wobei das Muster konzentrische Kreise respektive konzentrische Teilkreise aufweist.

8. Batteriegehäuse (100) nach einem der Ansprüche 1 bis 7,
wobei das Gehäuseunterteil (110) eine Vielzahl, insbesondere vier, Seitenwände aufweist, welche den Innenraum begrenzen und welche mit dem Bodenelement (112) verbunden sind und sich von dem Bodenelement (112) zumindest im Wesentlichen senkrecht erstrecken,
wobei das Gehäuseunterteil (110) vorzugsweise eine Vielzahl von Trennwänden (114i, 114ii) aufweist, welche den Innenraum in eine Vielzahl an Zellkammern (20) aufteilen.

9. Batteriegehäuse (100) nach Anspruch 8,
wobei der mindestens eine Bereich von den Seitenwänden und/oder den Trennwänden (114i, 114ii) beabstandet angeordnet ist, so dass zwischen der Vielzahl von Vorsprüngen (10) und den Seitenwänden respektive den Trennwänden (114i, 114ii) ein Spalt (22) angeordnet ist.

10. Batteriegehäuse (100) nach einem der Ansprüche 1 bis 9,
wobei der mindestens eine Bereich der gesamten Fläche des Bodenelementes (112) in Richtung des Innenraumes entspricht, oder insbesondere in Kombination mit Anspruch 11, wobei der mindestens eine Bereich einer Fläche des Bodenelementes (112) in einer Zellkammer (20) entspricht.

11. Batteriegehäuse (100) nach einem der Ansprüche 1 bis 10,
wobei ein Querschnitt der Vielzahl von Vorsprüngen (10) zumindest im Wesentlichen dreiecksförmig, halbkreisförmig oder rechteckförmig ist.

12. Batteriegehäuse (100) nach einem der Ansprüche 1 bis 11,
wobei die Oberfläche der Vielzahl von Vorsprüngen (10) aufgeraut ist.

13. Batterie für ein Fahrzeug, insbesondere Batterie für einen Lastkraftwagen, wobei die Batterie Folgendes aufweist:
- ein Batteriegehäuse (100) nach einem der vorhergehenden Ansprüche;
- eine Vielzahl von elektrochemischen Zellen,
wobei die Vielzahl von elektrochemischen Zellen in dem Innenraum des Gehäuseunterteiles (110) angeordnet sind und über einen Klebstoff, welcher auf dem Bodenelement (112) des Gehäuseunterteiles (110) angeordnet ist, mit dem Bodenelement (112) stoffschlüssig verbunden sind.

14. Batterie nach Anspruch 13,
wobei der Klebstoff ein Heißklebstoff oder ein Epoxidharz-Klebstoff ist.

15. Batterie nach Anspruch 13 oder 14,
wobei die Vielzahl von Vorsprüngen (10) die Oberfläche des mindestens einen Bereichs des Bodenelementes (112) um mindestens 20%, bevorzugt um mindestens 25%, besonders bevorzugt um mindestens 30%, vergrößert, derart dass sich die Klebefläche um mindestens 20%, bevorzugt um mindestens 25%, besonders bevorzugt um mindestens 30%, vergrößert.

## Claims

1. Battery housing (100) for a vehicle battery, in particular for a truck battery, the battery housing (100) having the following:
- a lower housing part (110) for receiving a multiplicity of electrochemical cells, the lower housing part (110) enclosing an interior space; and
- a housing cover (120), which can be connected or is connected to the lower housing part (110) in such a way that the interior space is sealed off and closed off from an external environment,
wherein the lower housing part (110) has a base element (112), and wherein a multiplicity of projections (10) are arranged in a pattern on at least one area of the base element (112) which is designed to receive an adhesive for fastening the multiplicity of electrochemical cells, whereby the roughness of the base element (112) is increased on a macroscopic level in order to improve the bonding effect of the adhesive on the base element (112) of the lower housing part (110), and
wherein at least one projection (10) of the multiplicity of projections (10) has a multiplicity of notches along the direction of extent of the projection (10), in such a way that the projection (10) at least substantially has a peak/valley profile along its direction of extent.

2. Battery housing (100) according to Claim 1,
wherein the multiplicity of projections (10) increase the surface area of the at least one area of the base element (112) by at least 20%, preferably by at least 25%, particularly preferably by at least 30%, and/or
wherein the multiplicity of projections (10) extend at least substantially perpendicularly from the base element (112) in the direction of the interior space.

3. Battery housing (100) according to Claim 1 or 2,
wherein the multiplicity of projections (10) are arranged in a strip pattern.

4. Battery housing (100) according to Claim 3,
wherein at least some of the strips extend along the longitudinal direction (L) of the battery housing (100), and/or
wherein at least some of the strips extend along a width direction (B) of the battery housing (100).

5. Battery housing (100) according to Claim 3,
wherein the strips extend diagonally to a longitudinal direction (L) of the battery housing (100).

6. Battery housing (100) according to Claim 1 or 2,
wherein the pattern corresponds at least substantially to a waffle-like pattern.

7. Battery housing (100) according to Claim 1 or 2,
wherein the pattern has concentric circles or concentric partial circles.

8. Battery housing (100) according to one of Claims 1 to 7,
wherein the lower housing part (110) has a multiplicity of side walls, in particular four, which delimit the interior space and which are connected to the base element (112) and extend at least substantially perpendicularly from the base element (112),
wherein the lower housing part (110) preferably has a multiplicity of partition walls (114i, 114ii), which divide the interior space into a multiplicity of cell chambers (20).

9. Battery housing (100) according to Claim 8,
wherein the at least one area is arranged at a distance from the side walls and/or the partition walls (114i, 114ii), so that a gap (22) is arranged between the multiplicity of projections (10) and the side walls or the partition walls (114i, 114ii).

10. Battery housing (100) according to one of Claims 1 to 9,
wherein the at least one area corresponds to the entire surface area of the base element (112) in the direction of the interior space, or in particular in combination with Claim 11, wherein the at least one area corresponds to a surface area of the base element (112) in a cell chamber (20).

11. Battery housing (100) according to one of Claims 1 to 10,
wherein a cross section of the multiplicity of projections (10) is at least substantially triangular, semicircular or rectangular.

12. Battery housing (100) according to one of Claims 1 to 11,
wherein the surface of the multiplicity of projections (10) is roughened.

13. Battery for a vehicle, in particular battery for a truck, the battery having the following:
- a battery housing (100) according to one of the preceding claims;
- a multiplicity of electrochemical cells,
wherein the multiplicity of electrochemical cells are arranged in the interior space of the lower housing part (110) and are connected to the base element (112) in a material-bonding manner by means of an adhesive which is arranged on the base element (112) of the lower housing part (110).

14. Battery according to Claim 13,
wherein the adhesive is a hot-melt adhesive or an epoxy-resin adhesive.

15. Battery according to Claim 13 or 14,
wherein the multiplicity of projections (10) increase the surface of the at least one area of the base element (112) by at least 20%, preferably by at least 25%, particularly preferably by at least 30%, in such a way that the adhesive surface area increases by at least 20%, preferably by at least 25%, particularly preferably by at least 30%.

## Revendications

1. Boîtier de batterie (100) pour une batterie de véhicule, en particulier pour une batterie de camion, le boîtier de batterie (100) présentant les caractéristiques suivantes :
- une partie inférieure de boîtier (110) destinée à recevoir une pluralité de cellules électrochimiques, la partie inférieure de boîtier (110) renfermant un espace intérieur ; et
- un couvercle de boîtier (120) qui peut être raccordé ou est raccordé à la partie inférieure de boîtier (110) de telle sorte que l'espace intérieur est rendu étanche et fermé par rapport à l'environnement extérieur,
la partie inférieure de boîtier (110) possédant un élément de fond (112), et une pluralité de saillies (10) étant disposées selon un motif sur au moins une zone de l'élément de fond (112) qui est configurée pour recevoir un adhésif destiné à la fixation de la pluralité de cellules électrochimiques, moyennant quoi la rugosité de l'élément de fond (112) au niveau macroscopique est augmentée, afin d'améliorer l'effet adhésif de l'adhésif sur l'élément de fond (112) de la partie inférieure de boîtier (110), et
au moins une saillie (10) de la pluralité de saillies (10) possédant une pluralité d'encoches le long de la direction d'extension de la saillie (10), et ce de telle sorte que la saillie (10) présente au moins sensiblement un profil en pente/vallée le long de sa direction d'extension.

2. Boîtier de batterie (100) selon la revendication 1,
la pluralité de saillies (10) agrandissant la surface l'au moins une zone de l'élément de fond (112) d'au moins 20 %, de préférence d'au moins 25 %, particulièrement de préférence d'au moins 30 %, et/ou la pluralité de saillies (10) s'étendant au moins sensiblement perpendiculairement à partir de l'élément de fond (112) en direction de l'espace intérieur.

3. Boîtier de batterie (100) selon la revendication 1 ou 2,
la pluralité de saillies (10) étant disposées selon un motif de bandes.

4. Boîtier de batterie (100) selon la revendication 3,
au moins certaines des bandes s'étendant le long de la direction longitudinale (L) du boîtier de batterie (100), et/ou au moins une partie des bandes s'étendant le long d'une direction de largeur (B) du boîtier de batterie (100).

5. Boîtier de batterie (100) selon la revendication 3,
les bandes s'étendant en diagonale par rapport à une direction longitudinale (L) du boîtier de batterie (100).

6. Boîtier de batterie (100) selon la revendication 1 ou 2,
le motif correspondant au moins sensiblement à un motif en forme de gaufre.

7. Boîtier de batterie (100) selon la revendication 1 ou 2,
le motif présentant respectivement des cercles concentriques et des cercles primitifs concentriques.

8. Boîtier de batterie (100) selon l'une des revendications 1 à 7,
la partie inférieure de boîtier (110) possédant une pluralité, en particulier quatre, parois latérales, lesquelles délimitent l'espace intérieur et lesquelles sont reliées à l'élément de fond (112) et s'étendent au moins sensiblement perpendiculairement à l'élément de fond (112),
la partie inférieure de boîtier (110) possédant de préférence une pluralité de parois de séparation (114i, 114ii), lesquelles divisent l'espace intérieur en une pluralité de chambres de cellule (20).

9. Boîtier de batterie (100) selon la revendication 8,
l'au moins une zone étant disposée à une certaine distance des parois latérales et/ou des parois de séparation (114i, 114ii), de sorte qu'une fente (22) est disposée entre la pluralité de saillies (10) et les parois latérales ou les parois de séparation (114i, 114ii).

10. Boîtier de batterie (100) selon l'une des revendications 1 à 9,
l'au moins une zone correspondant à la surface totale de l'élément de fond (112) en direction de l'espace intérieur, ou notamment en combinaison avec la revendication 11, l'au moins une zone correspondant à une surface de l'élément de fond (112) dans une chambre de cellule (20).

11. Boîtier de batterie (100) selon l'une des revendications 1 à 10,
une section transversale de la pluralité de saillies (10) étant au moins sensiblement triangulaire, semi-circulaire ou rectangulaire.

12. Boîtier de batterie (100) selon l'une des revendications 1 à 11,
la surface de la pluralité de saillies (10) étant rendue rugueuse.

13. Batterie pour un véhicule, en particulier batterie pour un camion, la batterie possédant les éléments suivants :
- un boîtier de batterie (100) selon l'une des revendications précédentes ;
- une pluralité de cellules électrochimiques,
la pluralité de cellules électrochimiques étant disposées dans l'espace intérieur de la partie inférieure de boîtier (110) et étant reliées par liaison de matière à l'élément de fond (112) par l'intermédiaire d'un adhésif qui est disposé sur l'élément de fond (112) de la partie inférieure de boîtier (110).

14. Batterie selon la revendication 13,
l'adhésif étant un adhésif thermofusible ou un adhésif à base de résine époxy.

15. Batterie selon la revendication 13 ou 14,
la pluralité de saillies (10) agrandissant la surface de l'au moins une zone de l'élément de fond (112) d'au moins 20 %, de préférence d'au moins 25 %, particulièrement de préférence d'au moins 30 %, de sorte que la surface adhésive s'agrandissant d'au moins 20 %, de préférence d'au moins 25 %, particulièrement de préférence d'au moins 30 %.
